# EUROPEAN PATENT SPECIFICATION

(11) **EP 3 649 369 B1**
(45) Date of publication and mention of the grant of the patent: **15.04.2026**
(21) Application number: 18742567.3
(22) Date of filing: 05.07.2018
(51) Int. Cl.: F16F 13/14, F16F 15/00, F16F 15/023, F16F 15/027, F16F 13/30, F16C 27/04, F16C 27/06, F16C 19/06, F04D 19/04, F04D 29/66

(54) **MAGNETORHEOLOGICAL DAMPER AND DAMPING METHOD**
MAGNETORHEOLOGISCHER DÄMPFER UND DÄMPFUNGSVERFAHREN
AMORTISSEUR MAGNÉTORHÉOLOGIQUE ET PROCÉDÉ D'AMORTISSEMENT

(30) Priority: 07.07.2017 GB 201710927
(43) Date of publication of application: 13.05.2020
(73) Proprietor: Edwards Limited, Burgess Hill, Sussex RH15 9TW (GB)
(72) Inventor: SMITH, Paul David, Burgess Hill Sussex RH15 9TW (GB)
(74) Representative: Norton, Ian Andrew
(86) International application number: PCT/GB2018/051904
(87) International publication number: WO 2019/008370

(56) References cited:
- EP-A1- 2 500 589
- WO-A1-86/04126
- DE-A1- 102014 009 616
- US-A- 5 452 957
- US-B2- 6 883 967

## Description

### FIELD OF THE INVENTION

The present invention relates to a damper and method.

### BACKGROUND

Dampers are known. Typically, dampers are used to reduce the amplitude of vibrations being transferred from one component to another. Although various dampers exist, they each have their own shortcomings. Accordingly, it is desired to provide an improved damper.

US6,883,967 describes a bearing assembly rotatably supporting a vehicle driveshaft assembly. The bearing assembly includes a rigid bracket that is secured to a support surface of the vehicle, a support member that is supported within the rigid bracket, and an annular bearing that is supported within the support member for rotatably supporting the driveshaft assembly. The support member is formed from a resilient material and has a cavity formed therein. A plurality of bladders is disposed within the cavity. Each of the bladders is filled with a quantity of a rheological fluid. Fluid communication between adjacent pairs of the bladders is provided by respective control valves. A control circuit is provided for selectively generating and applying an energy field to each of the control valves so as to vary the ability of the rheological fluid to flow therethrough between the associated pair of bladders.

### SUMMARY

According to a first aspect, there is provided an apparatus, comprising: a damper having an inner hub and a concentric outer mount coupled with the inner hub by at least one spring member which defines at least one damper channel; a magneto rheological fluid within the damper channel; a magnetic element operable to vary a viscosity of the magneto rheological fluid within the damper channel; and control logic configured to control said magnetic element to vary a magnetic field generated by said magnetic element to vary said viscosity of said magneto rheological fluid within said damper channel; characterised in that the apparatus comprises a pump having a pump shaft assembly received in said inner hub, wherein said control logic is configured to control said magnetic element to delay generating said magnetic field for a delay period following activation of said pump.

The first aspect recognises that a problem with existing pump shaft assembly dampers is that it is difficult to vary the level of damping provided. An apparatus is provided which can vary the damping between the inner hub and the outer mount to reduce the vibrations experienced by the outer mount caused by the pump shaft assembly under different conditions.

In one embodiment, the damper channel is partially filled with the magneto rheological fluid. Only partially filling the damper channel provides space into which the magneto rheological fluid can flow in response to vibrations caused by the pump shaft assembly. This helps to agitate the magneto rheological fluid in order to redistribute particles within the magnetic rheological fluid. This helps to ensure uniform viscosity along the channel, rather than just in the regions where any particles may have settled.

In one embodiment, the damper channel is no more than 90% filled with the magneto rheological fluid. It will be appreciated that, typically, the channel may be somewhere between 75% and 90% filled. This helps to provide for enough space for mixing of the magneto rheological fluid.

In one embodiment, the apparatus comprises at least one reservoir in fluid communication with the damper channel and configured as a source of the magneto rheological fluid. Movement of the magneto rheological fluid from the reservoir can also help to redistribute particles within the magneto rheological fluid.

The apparatus comprises control logic configured to control the magnetic element to vary a magnetic field generated by the magnetic element to vary the viscosity of the magneto rheological fluid within the damper channel. Accordingly, the magnetic field may be varied or changed in order to vary or change the viscosity of the magneto rheological fluid.

The control logic is configured to control the magnetic element to delay generating the magnetic field for a delay period following activation of the pump. Delaying the generation of the magnetic field helps to provide for some mixing in order to redistribute particles within the magnetic rheological fluid prior to the magnetic field being applied.

In one embodiment, the control logic is configured to restrict a rotational speed of the pump during the delay period. Restricting, constraining or preventing the rotational speed of the pump exceeding a threshold amount helps to reduce the magnitude of vibrations in the inner hub until after the magnetic field has been applied.

In one embodiment, the control logic is configured to control the magnetic element to generate the magnetic field after the delay period. Accordingly, the magnetic field may not be applied until after mixing of the magneto rheological fluid has occurred.

In one embodiment, the control logic is configured to derestrict the rotational speed of pump following the delay period. Accordingly, once the magneto rheological fluid has the appropriate viscosity to achieve a particular amount of damping, the rotational speed of the pump may then be increased.

In one embodiment, the control logic is configured to retain the delay period while a temperature of the pump fails to exceed a threshold amount. Accordingly, the speed of the pump may remain constrained until its temperature achieves a selected threshold amount.

In one embodiment, the control logic is configured to end the delay period when the temperature of the pump exceeds the threshold amount. Accordingly, when the temperature of the pump is greater than the threshold amount then the rotational speed of the pump may be increased.

In one embodiment, the control logic is configured to control the magnetic element to cease generating the magnetic field when the rotational speed of the pump reaches a threshold amount. Accordingly, when the pump reaches its normal operating speed, the magnetic field may be reduced or switched off in order to reduce the viscosity of the magneto rheological fluid and reduce coupling between the inner hub and outer mount.

In one embodiment, the control logic is responsive to signals received to control the magnetic element to vary the magnetic field generated by the magnetic element to vary the viscosity of the magneto rheological fluid within the damper channel. Accordingly, the strength of the magnetic field may be varied or changed in order to vary or change the viscosity of the magneto rheological fluid to vary the amount of damping.

In one embodiment, the signals indicate at least one of an acceleration measured by an accelerometer and a pressure measured by a pressure sensor.

In one embodiment, the apparatus comprises the pressure sensor.

In one embodiment, the damper comprises a metal or polymer spring damper.

In one embodiment, the damper comprises an axially stiff, radially compliant bearing support spring element.

In one embodiment, the pump shaft assembly comprises a bearing which receives a pump shaft.

In one embodiment, the pump comprises a vacuum pump.

According to a second aspect, there is provided a method comprising: providing a damper having an inner hub and a concentric outer mount coupled with the inner hub by at least one spring member which defines at least one damper channel; providing a magneto rheological fluid within the damper channel; and controlling a magnetic element to vary a magnetic field generated by said magnetic element to vary a viscosity of said magneto rheological fluid within said damper channel; characterised in that a pump shaft assembly of a pump is received in the inner hub and the magnetic element is controlled to delay generating said magnetic field for a delay period following activation of said pump.

In one embodiment, the method comprises partially filling the damper channel with the magneto rheological fluid.

In one embodiment, the method comprises no more than 90% filling the damper channel with the magneto rheological fluid.

In one embodiment, the method comprises providing at least one reservoir in fluid communication with the damper channel as a source of the magneto rheological fluid.

In one embodiment, the method comprises restricting a rotational speed of the pump during the delay period.

In one embodiment, the method comprises controlling the magnetic element to generate the magnetic field after the delay period.

In one embodiment, the method comprises derestricting the rotational speed of pump following the delay period.

In one embodiment, the method comprises retaining the delay period while a temperature of the pump fails to exceed a threshold amount.

In one embodiment, the method comprises ending the delay period when the temperature of the pump exceeds the threshold amount.

In one embodiment, the method comprises controlling the magnetic element to cease generating the magnetic field when the rotational speed of the pump reaches a threshold amount.

In one embodiment, the method comprises controlling the magnetic element to vary the magnetic field generated by the magnetic element to vary the viscosity of the magneto rheological fluid within the damper channel in response to signals received.

In one embodiment, the signals indicate at least one of an acceleration measured by an accelerometer and a pressure measured by a pressure sensor.

In one embodiment, the damper comprises a metal or polymer spring damper.

In one embodiment, the damper comprises an axially stiff, radially compliant bearing support spring element.

In one embodiment, the pump shaft assembly comprises a bearing which receives a pump shaft.

In one embodiment, the pump comprises a vacuum pump.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figures 1A to 1E illustrate a damper assembly according to one embodiment; and
Figure 2 illustrates the operation of the damper assembly according to one embodiment.

### DESCRIPTION OF THE EMBODIMENTS

Before discussing the embodiments in any more detail, first an overview will be provided. Embodiments provide a damper assembly (which may be formed from metal, a polymer or a combination of the two) which receives a pump shaft assembly. The damper assembly has an inner annular body which is coaxially or concentrically received within an outer annular body. The inner annular body and outer annular body are connected by way of spring structures. The inner annular body, outer annular body and spring structures define damping channels therebetween which receive a magneto rheological fluid therein. The arrangement of the damping channels and a reservoir, as well has vibrations from the inner hub, helps the magneto rheological fluid flow to aide redistribution of its particles back into suspension. In operation, the inner annular body receives a pump shaft assembly and vibrations exhibited by the pump shaft assembly which act upon the inner annular body are dampened by the magneto rheological fluid in the damping channels, which dampens the vibrations experienced by the outer annular body. The damping response can be adjusted by adjusting a magnetic field applied by a magnetic element which varies the viscosity of the magneto rheological fluid. Control logic may be provided which controls the generation of the magnetic field during speed changes of the pump shaft assembly and which delays speed changes or limits speeds in order to ensure adequate distribution of particles within the magneto rheological fluid.

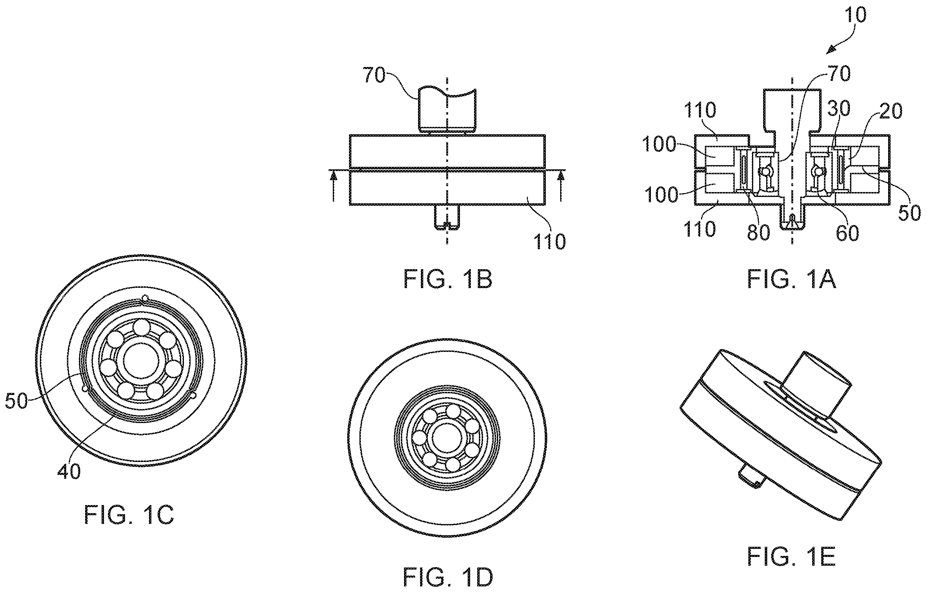

Figures 1A to 1E illustrate a damper assembly, generally 10, according to one embodiment. The damper assembly 10 comprises an outer annular body 20, which receives an inner annular body 30. The inner annular body 30 is concentrically located and co-axially aligned with the outer annular body 20. The inner annular body 30 is coupled with the outer annular body 20 by way of a series of spring structures 40 which extend radially between the inner annular body 30 and the outer annular body 20, following a generally circumferential path (similar to that described in EP2064448). The spring structures 40 define a series of damping channels 50 between opposing faces of the spring structures 40, and the inner annular body 30 and the outer annular body 20. A radially inner surface of the inner annular body 30 defines a void into which a bearing assembly 60 is received. The bearing assembly defines a through bore 70 into which a rotatable shaft 75 is received. A reservoir 80 is defined by a void between the outer annular body 20 and the inner annular body 30. The reservoir 80 is in fluid communication with each of the damping channels 50. A magneto rheological fluid is provided which fills the reservoir 80 and partially fills the damping channels 50.

Concentrically surrounding the outer annular body 20 and coaxially aligned is an electro magnet coil 100 with electro magnet poles 110. The electro magnet coil 100 can be energised to generate a magnet field to influence the magneto rheological fluid as will be described in more detail below.

In operation, when the rotatable shaft 75 received within the through bore 70 rotates, any vibrations experienced by the bearing 60 are transferred to the inner annular body 30. Those vibrations are then damped by the magneto rheological fluid within the damping channels 50, which reduces the amplitude of the vibrations experienced by the outer annular body 20.

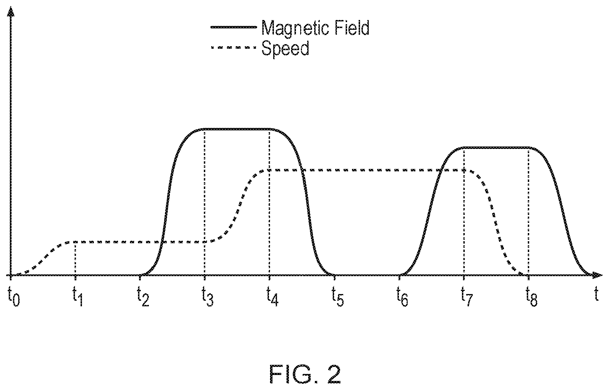

Figure 2 illustrates an example operation of the damper assembly 10. At time T0, the turbo pump is activated. The pump speed increases until, at time T1, an initial threshold speed is reached. This initial threshold speed is retained until time T2, when either a predetermined time period has elapsed and/or a threshold temperature of the damper assembly and/or the pump has been achieved. This enables the pump to be operated at a low speed for a period of time, which causes any settling in the magneto rheological fluid to be reversed and the particles to be re-dispersed.

Between times T2 and T3, the electromagnetic coil 100 is energized to generate a magnetic field which increases the viscosity of the magneto rheological fluid. This increases the damping provided by the damper assembly 10 in advance of the speed constraint on the pump being removed. At time T3, the speed constraint is removed and the pump speed increases to its normal operating speed at time T4.

At time T4, the magnetic field generated by the magnetic coil 100 is reduced, until it is removed at time T5. This removes any damping during normal operation.

Should a changing operating speed be required, then the magnetic field is typically reapplied prior to the change in speed occurring. At time T6, the magnetic field is reapplied prior to the pump being switched to an off state or low-speed idle state. At time T7, the speed of the pump is reduced to zero. At time T8, the magnetic field generated by the magnetic coil 100 is switched off.

Although in this example the magnetic field transitions between on and off, it will be appreciated that in some embodiments the strength of the magnetic field can be made to vary, depending on the vibrations being experienced. Those vibrations can be measured by one or more accelerometers (not shown) provided on the damper assembly 10, the pump received by the damper assembly, and/or by a piece of equipment such as a vacuum chamber or component within the vacuum chamber such as an electron microscope support used in conjunction with the pump.

Embodiments incorporate a Magneto Rheological Fluid (MRF) in the channels between the spring arms to provide viscous damping. This makes use of the ability to increase the yield stress of the fluid, and hence the effective viscosity through the application of a magnetic field. This provides a method for incorporating tunable/active damping to the lower bearing of turbo mechanical pumps which results in improved vibration levels both at full speed and when running through critical harmonic frequencies.

Many existing damper designs use an elastomer element to provide the necessary damping to minimise transmission of vibrations to the pump body and reduce resonances at critical frequencies during run-up. The use of an elastomer element introduces an undesired spring effect which is non-linear as a function of the excitation frequency. In addition, the choice of the fixed-level of damping provided by the elastomer element is always a compromise between the requirements for relatively-high damping to ensure that the pump can safely pass through critical speeds and relatively-low damping to minimise transmission of vibrations to the pump envelope at full running speed. An ability to tune the damping to match the requirements at a given rotor speed can therefore offer significant improvement in the transmitted vibration performance of the pump.

In embodiments, a suitable MRF is introduced into the reservoir and damping channels of the damper and is held within the reservoir and the damping channels using a mechanical seal. The use of a mechanical seal will introduce a component of stiffness and damping associated with the elastomer seal but if correctly designed this should be negligible. For example, a simple low stiffness Nitrile or Viton gasket seal of less than 1mm could be used. The electro magnet coils are arranged and the current applied in opposite polarity to each coil to provide radial magnetic field lines parallel to the direction of squeezing action. The magnetic particles align along these field lines and hence the efficiency of the viscosity change is optimised by this configuration. The volume of fluid is chosen to provide a full film within the channels but with a small unfilled volume within the reservoir(s), for example these would be 80% to 90% full. This promotes turbulence and mixing as a result of the squeezing action on the damper channels due to the transmitted vibration from the bearing. To further promote mixing after a period of settlement of the particles it is preferable to have a delayed turn-on of the damper. The turn-on point would typically be a function of the measured rotor speed. In this way the particles will be subjected to a relative high disturbance during start-up, before the application of a magnetic field. This is beneficial since the field will act to align the particles and impede mixing. One approach may be to extend the low frequency rotation if a low temperature is measured for the pump suggesting a period of inactivity with a reduced delay if the pump is above a predetermined threshold temperature.

A tuneable damper of embodiments can be utilised either for transient use during certain operating conditions associated with high vibration or constantly in the form of a fully active damper to minimise vibrations in all states of operation. One approach would be to turn the damper on during start-up to increase damping when running through critical frequencies then reduce the damping to a minimum level to provide optimum isolation between the rotor and the housing once full speed has been reached. This could be a simple fully on / fully off approach based upon the measured rotor speed or adjusting the applied current as a function of rotor speed to gradually reduce the damping towards the higher running frequencies. The latter approach would avoid any transient instabilities caused by a sudden change in the level of damping.

Another scenario may be to employ the damper when operating at high backing pressure to contain the destabilizing effects generated in certain applications. This would require some means of detecting the occurrence of the event. One approach is to use the accelerometer installed in some drive units to register vibrations above a certain threshold value and turn on the damper in response to these. Alternatively, a measurement of the backing pressure could be provided to activate the damper.

Fully active damping can also be provided in embodiments, but would require continuous measurement of the vibration levels and a feedback or feed forward approach adopted to adjust the current applied to the electromagnet of the damper to minimise the measured vibration levels. A direct velocity feedback approach may be suitable, however, several control algorithms could be considered. The vibration measurement could be provided either by an accelerometer on the drive circuit or a secondary accelerometer placed close to the flange or at specific vibration-sensitive locations within the end-user's equipment. The latter approach will provide the best solution to minimise transmitted vibration but may be more complicated to implement.

Magneto rheological fluids provide the ability to vary the fluid viscosity and hence the level of damping by several orders of magnitude. Embodiments provide a damper that specifically relates to turbo pumps or the use of such devices with axially-stiff radially-compliant bearing support elements.

It should be noted that these MRFs are based upon micron size particles and despite many recent improvements in colloidal stability the particles still have a tendency to settle out of the fluids over a period of a few days and agitation is often required to redistribute the particles throughout the fluid once they have settled. Embodiments attempt to address this through a combination of a fluid reservoir to promote turbulence due to the squeezing action to redistribute the particles and a control algorithm incorporating a delayed "turn-on" of the magnetic field to promote the redistribution of particles after a prolonged settling time.

Embodiments provide a bearing system of a turbo mechanical vacuum pump. In particular, embodiments provide a squeeze film damper and spring support for a turbo mechanical vacuum pump and its use in a hybrid mechanical/magnetic bearing system. Embodiments provide control algorithms and/or the use of a reservoir to promote turbulence to enhance mixing after sedimentation of the magnetic particles.

It will be appreciated that embodiment provide a damper for any type of rotating shaft. Although the embodiments described are for use in a turbo vacuum pump (such as a turbo pump), embodiments could be used with many different products where a controllable damping response of the rotor may be desirable. Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

### REFERENCE SIGNS

| | |
|---|---|
| damper assembly | 10 |
| outer annular body | 20 |
| inner annular body | 30 |
| spring structures | 40 |
| damping channels | 50 |
| bearing assembly | 60 |
| through bore | 70 |
| rotatable shaft | 75 |
| reservoir | 80 |
| electro magnet coil | 100 |
| electro magnet poles | 110 |

## Claims

1. An apparatus, comprising:
a damper (10) having an inner hub (30) and a concentric outer mount (20) coupled with said inner hub (30) by at least one spring member (40) which defines at least one damper channel (50);
a magneto rheological fluid within said damper channel (50);
a magnetic element (100) operable to vary a viscosity of said magneto rheological fluid within said damper channel (50); and
control logic configured to control said magnetic element (100) to vary a magnetic field generated by said magnetic element (100) to vary said viscosity of said magneto rheological fluid within said damper channel (50);
**characterised in that** the apparatus comprises a pump having a pump shaft assembly (60, 75) received in said inner hub, wherein said control logic is configured to control said magnetic element (100) to delay generating said magnetic field for a delay period following activation of said pump.

2. The apparatus of claim 1, wherein said damper channel (50) is partially filled with said magneto rheological fluid.

3. The apparatus of claim 1 or 2, wherein said damper channel (50) is no more than 90% filled with said magneto rheological fluid.

4. The apparatus of any preceding claim, comprising at least one reservoir (80) in fluid communication with said damper channel (50) and configured as a source of said magneto rheological fluid.

5. The apparatus of any preceding claim, wherein said control logic is configured to control said magnetic element (100) to generate said magnetic field after said delay period.

6. The apparatus of any preceding claim, wherein said control logic is configured to restrict a rotational speed of said pump during said delay period.

7. The apparatus of claim 6, wherein said control logic is configured to derestrict said rotational speed of said pump following said delay period.

8. The apparatus of claim 6 or claim 7, wherein said control logic is configured to control said magnetic element (100) to cease generating said magnetic field when said rotational speed of said pump reaches a threshold amount.

9. The apparatus of any preceding claim, wherein said control logic is configured to retain said delay period while a temperature of said pump fails to exceed a threshold amount.

10. The apparatus of claim 9, wherein said control logic is configured to end said delay period when said temperature of said pump exceeds said threshold amount.

11. The apparatus of any preceding claim, wherein said control logic is responsive to signals received to control said magnetic element (100) to vary said magnetic field generated by said magnetic element to vary said viscosity of said magneto rheological fluid within said damper channel (50).

12. The apparatus of claim 11, wherein said signals indicate at least one of an acceleration measured by an accelerometer and a pressure measured by a pressure sensor.

13. The apparatus of any preceding claim, wherein said pump shaft assembly comprises a bearing (60) which receives a pump shaft (75).

14. The apparatus of any preceding claim, wherein said pump comprises a vacuum pump.

15. A method, comprising
providing a damper having an inner hub (30) and a concentric outer mount (20) coupled with said inner hub (30) by at least one spring member (40) which defines at least one damper channel (50);
providing a magneto rheological fluid within said damper channel; and
controlling a magnetic element (100) to vary a magnetic field generated by said magnetic element (100) to vary a viscosity of said magneto rheological fluid within said damper channel (50);
wherein a pump shaft assembly (60, 75) of a pump is received in the inner hub and the magnetic element (100) is controlled to delay generating said magnetic field for a delay period following activation of said pump.

## Patentansprüche

1. Vorrichtung, umfassend:
einen Dämpfer (10) mit einer inneren Nabe (30) und einer konzentrischen äußeren Befestigung (20), durch mindestens ein Federelement (40), das mindestens einen Dämpferkanal (50) definiert, gekoppelt mit der inneren Nabe (30);
ein magnetorheologisches Fluid innerhalb des Dämpferkanals (50);
ein Magnetelement (100), das dazu betreibbar ist, eine Viskosität des magnetorheologischen Fluides innerhalb des Dämpferkanals (50) zu variieren; und
Steuerungslogik, konfiguriert zum Steuern des Magnetelements (100), um ein von dem Magnetelement (100) erzeugtes Magnetfeld zu variieren, um die Viskosität des magnetorheologischen Fluides innerhalb des Dämpferkanals (50) zu variieren;
**dadurch gekennzeichnet, dass** die Vorrichtung eine Pumpe mit einer Pumpenwellenanordnung (60, 75), aufgenommen in der inneren Nabe, umfasst, wobei die Steuerungslogik dazu konfiguriert ist, das Magnetelement (100) so zu steuern, dass es das Erzeugen des Magnetfeldes für einen Verzögerungszeitraum nach dem Aktivieren der Pumpe verzögert.

2. Vorrichtung nach Anspruch 1, wobei der Dämpferkanal (50) teilweise mit dem magnetorheologischen Fluid gefüllt ist.

3. Vorrichtung nach Anspruch 1 oder 2, wobei der Dämpferkanal (50) zu nicht mehr als 90 % mit dem magnetorheologischen Fluid gefüllt ist.

4. Vorrichtung nach einem der vorhergehenden Ansprüche, umfassend mindestens einen Behälter (80) in Fluidverbindung mit dem Dämpferkanal (50) und konfiguriert als eine Quelle des magnetorheologischen Fluides.

5. Vorrichtung nach einem der vorhergehenden Ansprüche, wobei die Steuerungslogik dazu konfiguriert ist, das Magnetelement (100) so zu steuern, dass es nach dem Verzögerungszeitraum das Magnetfeld erzeugt.

6. Vorrichtung nach einem der vorhergehenden Ansprüche, wobei die Steuerungslogik dazu konfiguriert ist, während des Verzögerungszeitraums eine Drehzahl der Pumpe zu begrenzen.

7. Vorrichtung nach Anspruch 6, wobei die Steuerungslogik dazu konfiguriert ist, nach dem Verzögerungszeitraum die Begrenzung der Drehzahl der Pumpe aufzuheben.

8. Vorrichtung nach Anspruch 6 oder Anspruch 7, wobei die Steuerungslogik dazu konfiguriert ist, das Magnetelement (100) so zu steuern, dass es das Erzeugen des Magnetfeldes beendet, wenn die Drehzahl der Pumpe einen Schwellenbetrag erreicht.

9. Vorrichtung nach einer der vorhergehenden Ansprüche, wobei die Steuerungslogik dazu konfiguriert ist, den Verzögerungszeitraum beizubehalten, während eine Temperatur der Pumpe einen Schwellenbetrag nicht überschreitet.

10. Vorrichtung nach Anspruch 9, wobei die Steuerungslogik dazu konfiguriert ist, den Verzögerungszeitraum zu beenden, wenn die Temperatur der Pumpe den Schwellenbetrag überschreitet.

11. Vorrichtung nach einem der vorhergehenden Ansprüche, wobei die Steuerungslogik in Reaktion auf zum Steuern des Magnetelements (100) empfangene Signale reagiert, um das von dem Magnetelement erzeugte Magnetfeld zu variieren, um die Viskosität des magnetorheologischen Fluides innerhalb des Dämpferkanals (50) zu variieren.

12. Vorrichtung nach Anspruch 11, wobei die Signale mindestens eine von einem Beschleunigungsmesser gemessene Beschleunigung und/oder einen von einem Drucksensor gemessenen Druck angeben.

13. Vorrichtung nach einem der vorhergehenden Ansprüche, wobei die Pumpenwellenanordnung ein Lager (60), das eine Pumpenwelle (75) aufnimmt, umfasst.

14. Vorrichtung nach einem der vorhergehenden Ansprüche, wobei die Pumpe eine Vakuumpumpe umfasst.

15. Verfahren, umfassend:
Bereitstellen eines Dämpfers mit einer inneren Nabe (30) und einer konzentrischen äußeren Befestigung (20), durch mindestens ein Federelement (40), das mindestens einen Dämpferkanal (50) definiert, gekoppelt mit der inneren Nabe (30);
Bereitstellen eines magnetorheologischen Fluides innerhalb des Dämpferkanals; und
Steuern eines Magnetelements (100), um ein von dem Magnetelement (100) erzeugtes Magnetfeld zu variieren, um eine Viskosität des magnetorheologischen Fluides innerhalb des Dämpferkanals (50) zu variieren;
wobei eine Pumpenwellenanordnung (60, 75) einer Pumpe in der inneren Nabe aufgenommen ist und das Magnetelement (100) so gesteuert wird, dass es das Erzeugen des Magnetfeldes für einen Verzögerungszeitraum nach dem Aktivieren der Pumpe verzögert.

## Revendications

1. Appareil, comprenant :
un amortisseur (10) ayant un moyeu interne (30) et un support externe concentrique (20) accouplé audit moyeu interne (30) par au moins un organe ressort (40) qui définit au moins un canal d'amortisseur (50) ;
un fluide magnétorhéologique à l'intérieur dudit canal d'amortisseur (50) ;
un élément magnétique (100) pouvant faire varier une viscosité dudit fluide magnétorhéologique à l'intérieur dudit canal d'amortisseur (50) ; et
une logique de commande configurée pour commander ledit élément magnétique (100) pour faire varier un champ magnétique généré par ledit élément magnétique (100) pour faire varier ladite viscosité dudit fluide magnétorhéologique à l'intérieur dudit canal d'amortisseur (50) ;
**caractérisé en ce que** l'appareil comprend une pompe ayant un ensemble arbre de pompe (60, 75) reçu dans ledit moyeu interne, dans lequel ladite logique de commande est configurée pour commander ledit élément magnétique (100) pour retarder la génération dudit champ magnétique pendant une période de retard après l'activation de ladite pompe.

2. Appareil selon la revendication 1, dans lequel ledit canal d'amortisseur (50) est partiellement rempli dudit fluide magnétorhéologique.

3. Appareil selon la revendication 1 ou 2, dans lequel ledit canal d'amortisseur (50) n'est pas rempli à plus de 90 % dudit fluide magnétorhéologique.

4. Appareil selon une quelconque revendication précédente, comprenant au moins un réservoir (80) en communication fluidique avec ledit canal d'amortisseur (50) et configuré comme une source dudit fluide magnétorhéologique.

5. Appareil selon une quelconque revendication précédente, dans lequel ladite logique de commande est configurée pour commander ledit élément magnétique (100) pour générer ledit champ magnétique suite à ladite période de retard.

6. Appareil selon une quelconque revendication précédente, dans lequel ladite logique de commande est configurée pour limiter une vitesse de rotation de ladite pompe pendant ladite période de retard.

7. Appareil selon la revendication 6, dans lequel ladite logique de commande est configurée pour ne plus limiter ladite vitesse de rotation de ladite pompe après ladite période de retard.

8. Appareil selon la revendication 6 ou la revendication 7, dans lequel ladite logique de commande est configurée pour commander ledit élément magnétique (100) pour qu'il cesse de générer ledit champ magnétique lorsque ladite vitesse de rotation de ladite pompe atteint une valeur seuil.

9. Appareil selon une quelconque revendication précédente, dans lequel ladite logique de commande est configurée pour prolonger ladite période de retard tant qu'une température de ladite pompe ne parvient pas à dépasser une valeur seuil.

10. Appareil selon la revendication 9, dans lequel ladite logique de commande est configurée pour mettre fin à ladite période de retard lorsque ladite température de ladite pompe dépasse ladite valeur seuil.

11. Appareil selon une quelconque revendication précédente, dans lequel ladite logique de commande répond à des signaux reçus pour commander ledit élément magnétique (100) pour faire varier ledit champ magnétique généré par ledit élément magnétique pour faire varier ladite viscosité dudit fluide magnétorhéologique à l'intérieur dudit canal d'amortisseur (50).

12. Appareil selon la revendication 11, dans lequel lesdits signaux indiquent au moins une parmi une accélération mesurée par un accéléromètre et une pression mesurée par un capteur de pression.

13. Appareil selon une quelconque revendication précédente, dans lequel ledit ensemble arbre de pompe comprend un roulement (60) qui reçoit un arbre de pompe (75).

14. Appareil selon une quelconque revendication précédente, dans lequel ladite pompe comprend une pompe à vide.

15. Procédé, comprenant :
la fourniture d'un amortisseur ayant un moyeu interne (30) et un support externe concentrique (20) couplé audit moyeu interne (30) par au moins un organe ressort (40) qui définit au moins un canal d'amortisseur (50) ;
la fourniture d'un fluide magnétorhéologique à l'intérieur dudit canal d'amortisseur ; et
la commande d'un élément magnétique (100) pour faire varier un champ magnétique généré par ledit élément magnétique (100) pour faire varier une viscosité dudit fluide magnétorhéologique à l'intérieur dudit canal d'amortisseur (50) ;
dans lequel un ensemble arbre de pompe (60, 75) d'une pompe est reçu dans le moyeu interne et l'élément magnétique (100) est commandé pour retarder la génération dudit champ magnétique pendant une période de retard après l'activation de ladite pompe.
